## Europäisches Patentamt
## European Patent Office
## Office européen des brevets

(19)

(11) Veröffentlichungsnummer: **0 182 001**
**B1**

(12)

# EUROPÄISCHE PATENTSCHRIFT

(45) Veröffentlichungstag der Patentschrift:
**11.10.89**

(21) Anmeldenummer: **85107929.3**

(22) Anmeldetag: **26.06.85**

(51) Int. Cl.⁴: **B 21 C 37/12, F 16 L 11/16**

(54) **Verfahren und Vorrichtung zum Herstellen eines flexiblen Wellrohres sowie nach dem Verfahren hergestelltes flexibles Wellrohr.**

(30) Priorität: **14.11.84 DE 3441565**

(43) Veröffentlichungstag der Anmeldung:
**28.05.86 Patentblatt 86/22**

(45) Bekanntmachung des Hinweises auf die Patenterteilung: **11.10.89 Patentblatt 89/41**

(84) Benannte Vertragsstaaten:
**AT BE CH DE FR GB IT LI LU NL SE**

(56) Entgegenhaltungen:
**DE—A— 2 127 750**
**US—A— 3 435 852**
**US—A— 3 538 728**
**US—A— 3 677 046**
**US—A— 4 058 997**

(73) Patentinhaber: **Fritz Hahn GmbH & Co. KG**
**Eurener Strasse 51-53**
**D-5500 Trier (DE)**

(72) Erfinder: **Dittrich, Werner**
**Blumenwiese 24**
**D-5503 Konz (DE)**

(74) Vertreter: **Schönherr, Wolfgang et al**
**Patentanwälte Wolfgang Schönherr Dipl.-Ing. Karl-Heinz Serwe Hawstrasse 28**
**D-5500 Trier (DE)**

EP 0 182 001 B1

Jouve, 18, rue St-Denis, 75001 Paris, France

## Beschreibung

Die Erfindung bezieht sich auf ein Verfahren und eine Vorrichtung zum Herstellen eines flexiblen Wellrohres durch schraubenlinienförmiges Wickeln eines dünnen Metallbandes, mit parallel zu seiner Längsrichtung verlaufenden Wellen, wobei mindestens jeweils eine Welle zweier aufeinanderfolgender Windungen ineinandergelegt und miteinander verbunden werden.

Derartige flexible Wellrohre werden im Heizungs-, Klima- und Lüftungsbereich eingesetzt. Zur Herstellung dieser Wellrohre wird zunächst ein sehr dünnes, schmales, flaches Metallband in einer Profilieranlage mit Hilfe von mehreren Formrollen derart vorgewellt, daß die Wellentäler und Wellenberge parallel zur Längsrichtung des Bandes verlaufen. Dieses vorgewellte Band wird aufgespult und kann dann auf einer Rohrwickelmaschine zu einem Rohr verarbeitet werden.

Die Herstellung des Rohres erfolgt in der Rohrwickelmaschine durch schraubenlinienförmiges Wicklen des vorgewellten Bandes, wobei die Ränder benachbarter Windungen miteinander verbunden werden. Es sind die verschiedensten Arten der Verbindung bekannt, beispielsweise Verkleben, Verschweißen, Falzen, stellenweises Niederdrücken eines Wellenscheitel od. dgl. mehr (US-A-4 058 997).

Soll ein wasser- und gasdichtes Rohr hergestellt werden, so sind an die Verbindungen der einzelnen Windungen sehr große Anforderungen zu stellen. Dies ist bei den bisher bekannten Verfahren sehr schwierig und nur mit großem Aufwand zu erzielen, indem beispielsweise das Rohr mehrlagig gewickelt wird. Nachteilig ist weiterhin, daß dadurch die Flexibilität des Rohres beeinträchtigt wird.

Aus der US-A-3 677 046 ist es bekannt, die benachbarten Bandränder des Bandes durch eine Falzverbindung miteinander zu verbinden. Dazu sind die Ränder des zulaufenden Bandes rechtwinklig zur Bandebene abgewinkelt, so daß die Bandränder ineinandergelegt werden können, in axialer Richtung zusammengepreßt werden können und umgebördelt werden können.

Auch nach diesem aus der US-A-3 677 046 bekannten Verfahren können keine gasdichten bzw. wasserdichten Rohre hergestellt werden, da die Überlappung der Bänder in der Falzverbindung nur gering ist.

Die Aufgabe der Erfindung besteht daher darin, ein Verfahren der eingangs genannten Art vorzuschlagen, mit dem auf einfache und materialsparende Weise kostengünstig ein wasser- und gasdichtes flexibles Wellrohr, beispielsweise auch auf einer Baustelle, hergestellt werden kann, das eine große Flexibilität hat.

Diese Aufgabe wird dadurch gelöst, daß zunächst die ineinanderliegende Welle in axialer Richtung umlaufend derart zusammengepreßt wird, daß die Wellenflanken der Welle flach aufeinanderliegen, daß die flachgepreßte Welle vom Wellenscheitel aus zum Wellengrund hin zusammengerollt wird und daß die zusammengerollte Welle anschließend in den Wellengrund eingepreßt wird.

Bei einer Vorrichtung zur Durchführung des Verfahrens mit einer Wickeleinrichtung zum Führen des gefertigten Rohres und mit einem an der Einlaufstelle des Bandes in die Wickeleinrichtung angeordneten, an den beiden Breitseiten des Bandes angreifenden, die gegenseitige Verbindung der im Rohr benachbarten Windungen bewirkenden Einlaufrollenpaar, wobei die Einlaufrolle um eine Drehachse innerhalb und die andere Einlaufrolle um eine Drehachse außerhalb der Wickeleinrichtung drehbar angeordner ist, ist erfindungsgemäß auf der Drehachse der oberen Einlaufrolle ein Formwerkzeug mit einem derartig ausgebildeten Formspalt festlegbar angeordnet, daß zunächst die ineinanderliegende Welle des zulaufenden Bandes in axialer Richtung umlaufend derart zusammengepreßt wird, daß die Wellenflanken der Welle flach aufeinander liegen und daß die flachgepreßte Welle anschließend vom Wellenscheitel aus zum Wellengrund hin zusammengerollt wird, und daß auf den Drehachsen der Einlaufrollen Preßringe zum Einspressen der verformten Welle in den Wellengrund angeordnet sind.

Vorteilhaft ist das Formwerkzeug als Durchlaufwerkzeug für die zu verformende Welle ausgebildet. Vorzugsweise ist der Formspalt des Formwerkzeuges bogenförmig gekrümmt ausgebildet, wobei der oder die Krümmungsmittelpunkte oberhalb der unteren Einlaufrolle liegen. Vorteilhaft entspricht der Krümmungsradius der Krümmung des Formspaltes etwa dem Radius des zu fertigenden Rohres. Vorzugsweise ist das Formwerkzeug von seinem Einlauf zu seinem Auslauf hin zunächst sich konisch zu einem schmalen Spalt und anschließend sich schneckenartig zu einer etwa runden Öffnung verengend ausgebildet.

Vorzugsweise ist das Formwerkzeug derartig auf der Drehachse der oberen Einlaufrolle angeordnet, daß sein als runde Öffnung ausgebildeter Auslauf etwa auf der Verbindungslinie der Drehachsen der beiden Einlaufrollen liegt und daß der Einlauf des Formwerkzeuges in Einlaufrichtung des Bandes gesehen vor dieser Verbindungslinie liegt.

Vorteilhaft sind die Preßringe an der Auslaufseite der Wickeleinrichtung im Abstand vom Formwerkzeug angeordnet, der gleich dem Abstand der verformten Wellen des Rohres ist.

Bei einem flexiblen Wellrohr aus einem schraubenlinienförmig gewickelten dünnen Metallband mit parallel zu seiner Längsrichtung verlaufenden Wellen, bei dem mindestens jeweils eine Welle zweier aufeinanderfolgender Windungen ineinandergelegt und miteinander verbunden werden, ist nach dem erfindungsgemäßen Verfahren zunächst die in axialer Richtung umlaufend zusammengepreßte und anschließend vom Wellenscheitel aus zum Wellengrund zusammengerollte ineinanderliegende Welle in den Wellengrund eingepreßt.

Die Erfindung ist in den Zeichnungen beispielhaft dargestellt. Es zeigen :

Fig. 1 eine erfindungsgemäße Vorrichtung in Ansicht auf die Stirnseite der Einlaufrollen,

Fig. 2 die Einlaufrollen mit Formwerkzeug in Seitenansicht in auseinandergezogener Stellung,

Fig. 3 das Einlaufrollenpaar mit Formwerkzeug in vergrößertem Detail,

Fig. 4 das Einlaufrollenpaar mit Formwerkzeug in Querschnitt nach IV-IV der Fig. 2,

Fig. 5 das Formwerkzeug in Seitenansicht im vergrößerten Detail,

Fig. 6 die ineinanderliegende Welle vor Einlauf in das Formwerkzeug im Schnitt nach VI-VI der Fig. 5,

Fig. 7 die flachgepreßte Welle im Schnitt durch das Formwerkzeug nach VII-VII der Fig. 5,

Fig. 8 die gebogene, flachgepreßte Welle im Schnitt durch das Formwerkzeug nach VIII-VIII der Fig. 5,

Fig. 9 die teilweise zusammengerollte Welle im Schnitt durch das Formwerkzeug nach IX-IX der Fig. 5,

Fig. 10 die zusammengerollte Welle im Schnitt durch das Formwerkzeug nach X-X der Fig. 5 und

Fig. 11 die in den Wellengrund eingepreßte Welle.

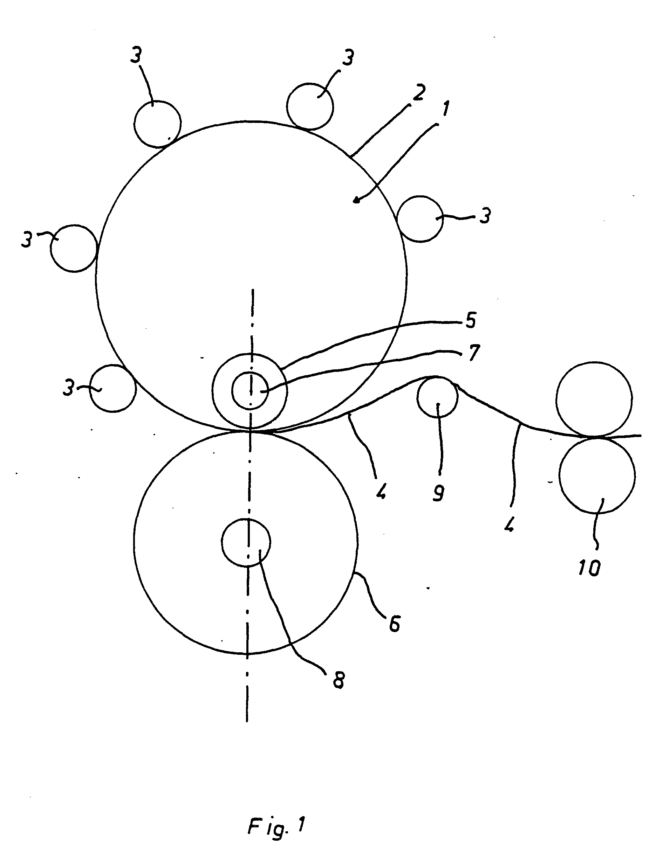

Nach Fig. 1 weist eine Vorrichtung zum Herstellen eines flexiblen Wellrohres durch schraubenlinienförmiges Wickeln eines Metallbandes 4 eine Wickeleinrichtung 1 zum Führen des gefertigten Rohres 2 auf. Die Wickeleinrichtung 1 hat zur Führung des Rohres auf einem Kreis angeordnete Führungsrollen 3, die um nicht dargestellte Achsen drehbar sind. An der Einlaufstelle des Bandes 4 in die Wickeleinrichtung 1 ist ein Einlaufrollenpaar 5 und 6 angeordnet, wobei die obere Einlaufrolle 5 um eine Drehachse 7 drehbar ist, die innerhalb der Wickeleinrichtung 1 sitzt, und wobei die untere Einlaufrolle 6 um eine Drehachse 8 drehbar angeordnet ist, die außerhalb der Wickeleinrichtung 1 angeordnet ist.

Die Einlaufrollen 5 und 6 sind durch einen nichtgezeigten Antrieb antreibbar. Die Einlaufrollen greifen an den beiden Breitseiten des zugeführten Bandes 4 an und bewirken die gegenseitige Verbindung der im Rohr 2 benachbarten Windungen.

Das Band 4 wird über eine vor der Wickeleinrichtung angeordnete verstellbare Andruckrolle 9 dem Einlaufrollenpaar 5 und 6 zugeführt. Vor der Andruckrolle 9 sind weitere Zuführrollenpaare 10 angeordnet.

Die Verbindung der einzelnen Windungslagen des Rohres miteinander erfolgt dadurch, daß zunächst jeweils eine Welle zweier aufeinanderfolgender Windungen ineinandergelegt wird, wie ineinanderliegende Welle in axialer Richtung des Rohres umlaufend derart zusammengepreßt wird, daß die Wellenflanken der Welle flach aufeinanderliegen, daß die flachgepreßte Welle vom Wellenscheitel aus zum Wellengrund hin zusammengerollt wird und daß die zusammengerollte Welle anschließend in den Wellengrund eingepreßt wird.

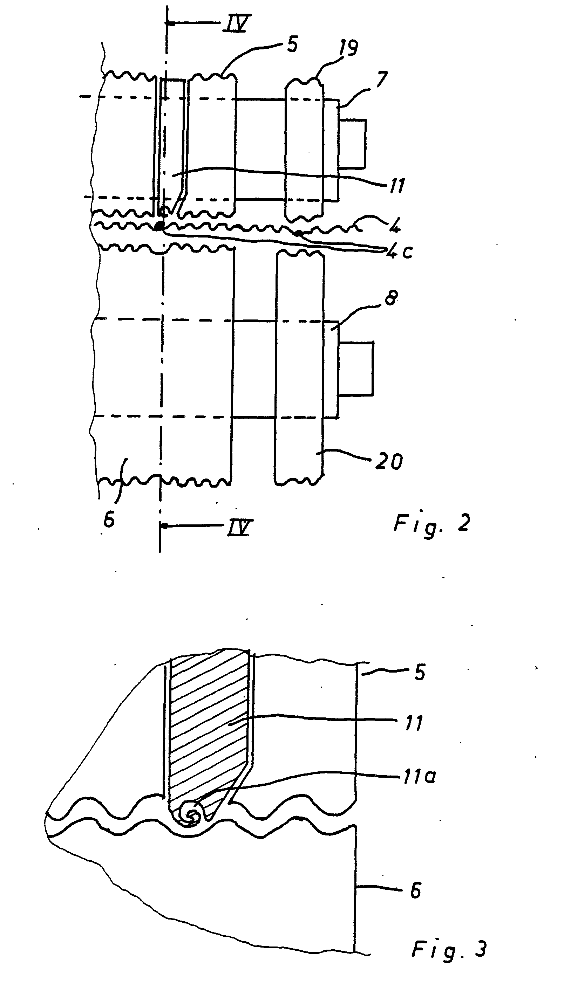

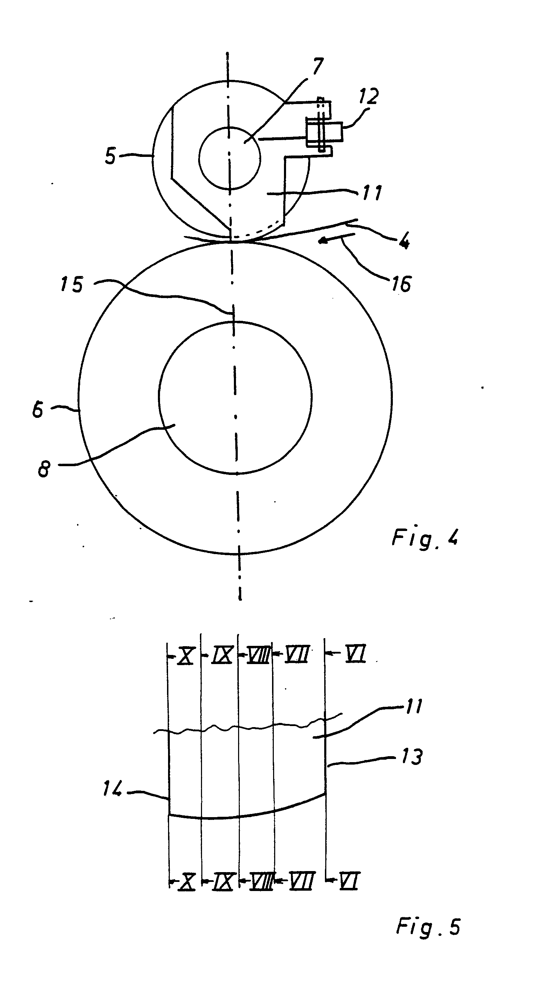

Wie die Fig. 2 bis 4 zeigen, weisen die Einlaufrollen 5 und 6 eine dem zugeführten Band 4 entsprechende Profilierung auf. Wie insbesondere die Fig. 2 und 3 zeigen, ist auf der oberen Drehachse 7 der oberen Einlaufrolle 5 ein das Zusammenpressen und Zusammenrollen der ineinanderliegenden Wellen des zulaufenden Bandes 4 bewirkendes Formwerkzeug 11 mit einem Formspalt 11a (Fig. 4) angeordnet. Der Formspalt 11a des Formwerkzeuges ist bogenförmig gekrümmt, wobei der Krümmungsmittelpunkt oberhalb der unteren Einlaufrolle 6 und oberhalb der oberen Achse 7 liegt.

Wie insbesondere die Fig. 4 zeigt, hat das Formwerkzeug 11 eine Klemmvorrichtung 12, so daß das Formwerkzeug auf der Drehachse 7 verschiebbar und verdrehbar angeordnet ist und mit Hilfe der Klemmvorrichtung 12 auf der Drehachse 7 festlegbar ist.

Das Formwerkzeug 11 ist als Durchlaufwerkzeug für die ineinanderliegende, zu verformende Welle ausgebildet. Das Formwerkzeug 11 ist von seinem Einlauf 13 zu seinem Auslauf 14 hin (Fig. 5) zunächst sich konisch zu einem schmalen Spalt und anschließend sich schneckenartig zu einer etwa runden Öffnung verengend ausgebildet.

Wie die Fig. 4 zeigt, ist das Formwerkzeug derart auf der Drehachse 7 der oberen Einlaufrolle 5 angeordnet, daß sein als runde Öffnung ausgebildeter Auslauf 14 etwa auf der Verbindungslinie 15 der Drehachsen 7 und 8 der beiden Einlaufrollen 5 und 6 liegt und daß der Einlauf 13 des Formwerkzeuges in der mit dem Pfeil 16 bezeichneten Einlaufrichtung des Bandes 4 gesehen vor dieser Verbindungslinie liegt.

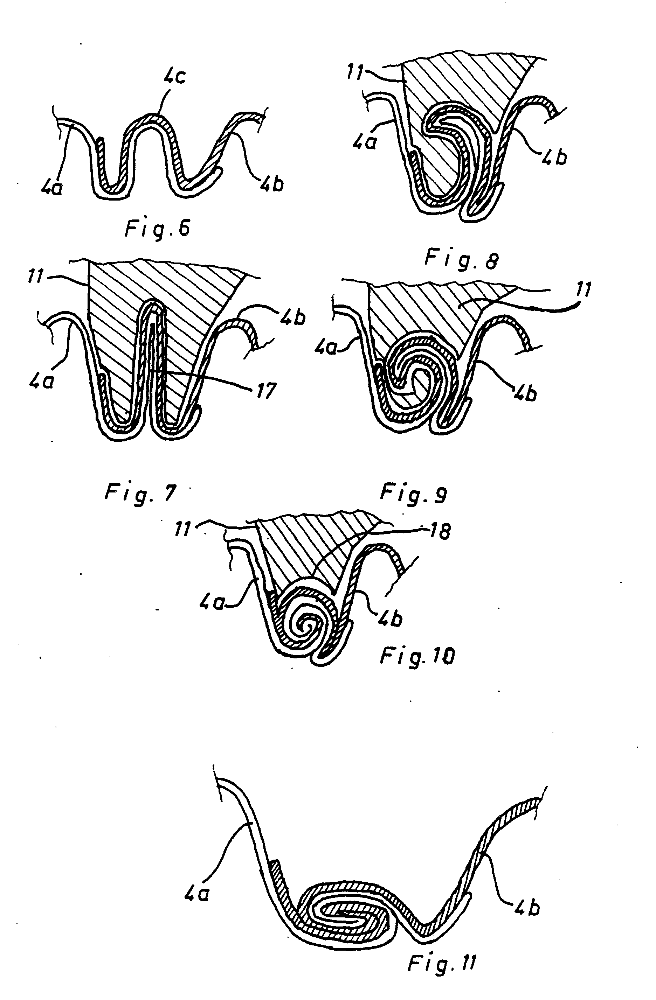

Die Fig. 5 bis 10 zeigen in Einlaufrichtung 16 des Bandes in unterschiedlichen Schnitten die Verformung der ineinanderliegenden Wellen des Bandes, sowie die Form des Formwerkzeuges. Nach Fig. 6 wird unmittelbar vor dem Einlauf 13 des Formwerkzeuges 11 eine Welle des zulaufenden Bandes 4b in ein Welle des bereits gewickelten Bandes 4a eingelegt. Die so ineinanderliegende Welle 4c läuft nun in den Einlauf 13 des Formwerkzeuges 11 ein, das sich zunächst von seinem Einlauf 13 zu einem schmalen Spalt 17 verengt, wie dies in Fig. 7 dargestellt ist. Dadurch wird die einlaufende Welle 4c in axialer Richtung umlaufend derart zusammengepreßt, daß die Wellenflanken der Welle 4c flach aufeinanderliegen, wie dies die Fig. 7 zeigt.

Der Formspalt des Formwerkzeuges 11 verengt sich anschließend schneckenartig entsprechend den Fig. 8 bis 10 zu einer runden Öffnung 18, so daß die zulaufende, flachgepreßte Welle 4c vom Wellenscheitel aus zum Wellengrund hin zusammengerollt den Auslauf 14 des Formwerkzeuges verläßt, wie dies in Fig. 10 dargestellt ist.

Wie die Fig. 2 zeigt, sind an der Auslaufseite der Wickeleinrichtung 1 im Abstand von einer Bandbreite des Bandes 4, verringert um zwei Wellenbreiten, vom Formwerkzeug 11 auf den Drehachsen 7 und 8 des Einlaufrollenpaares 5 und 6 Preßringe 19 und 20 drehbar angeordnet. Diese Preßringe pressen die zusammengerollte Welle 4c in den Wellengrund ein, wie dies in Fig. 11 gezeigt ist.

Ein so hergestelltes flexibles Wellrohr ist wasser- und gasdicht. Dies wird dadurch bewirkt, daß die ineinanderliegende Welle flachgepreßt und auf sehr engem Raum gerollt in den Wellengrund eingepreßt wird. Dadurch schrumpft das gefertigte Rohr in axialer Richtung um eine Wellenbreite in Bezug zu dem zugeführten Band 4. Die geschrumpfte Welle zieht sich spiralförmig um das Rohr und wirkt wegen der Materialkonzentration wie ein im Rohr eingelegter, spiralförmig geführter Draht, so daß das Rohr eine erhöhte Scheiteldruckfestigkeit aufweist. Darüber hinaus sind die Windungen in axialer und tangentialer Richtung durch die Materialkonzentration sicher miteinander verbunden. Weiterhin tritt nur ein geringer Materialverbrauch auf, da lediglich eine Wellenbreite verlorengeht.

Von besonderem Vorteil ist weiterhin, daß durch die vorgeschlagene Lösung die Flexibilität des gefertigten Rohres nicht beeinträchtigt wird. Mit der beschriebenen Vorrichtung ist auch die Herstellung von mehrbogigen Wellrohren möglich.

**Patentansprüche**

1. Verfahren zum Herstellen eines flexiblen Wellrohres durch schraubenlinienförmiges Wickeln eines dünnen Metallbandes mit parallel zu seiner Längsrichtung verlaufenden Wellen, wobei mindestens jeweils eine Welle zweier aufeinanderfolgender Windungen ineinandergelegt und miteinander verbunden werden, wobei zunächst die ineinanderliegende Welle (4c) in axialer Richtung umlaufend derart zusammengepreßt wird, daß die Wellenflanken der Welle flach aufeinanderliegen, daß die flachgepreßte Welle vom Wellenscheitel aus zum Wellengrund hin zusammengerollt wird und daß die zusammengerollte Welle anschließend in den Wellengrund eingepreßt wird.

2. Vorrichtung zur Durchführung des Verfahrens nach Anspruch 1 mit einer Wickeleinrichtung zum Führen des gefertigten Rohres und mit einem an der Einlaufstelle des Bandes in die Wickeleinrichtung angeordneten, an den beiden Breitseiten des Bandes angreifenden, die gegenseitige Verbindung der im Rohr benachbarten Windungen bewirkenden Einlaufrollenpaar, wobei die eine Einlaufrolle um eine Drehachse innerhalb und die andere Einlaufrolle um eine Drehachse außerhalb der Wickeleinrichtung drehbar angeordnet ist, wobei auf der Drehachse (7) der oberen Einlaufrolle (5) ein Formwerkzeug (11) mit einem derart ausgebildeten Formspalt (11a) festlegbar angeordnet ist, daß zunächst die ineinanderliegende Welle (4c) des zulaufenden Bandes (4) in axialer Richtung umlaufend derart zusammengepreßt wird, daß die Wellenflanken der Welle flach aufeinanderliegen, und daß die flachgepreßte Welle anschließend vom Wellenscheitel aus zum Wellengrund hin zusammengerollt wird, und daß auf den Drehachsen (7 und 8) der Einlaufrollen (5 und 6) Preßringe (19 und 20) zum Einpressen der verformten Welle (4c) in den Wellengrund angeordnet sind.

3. Vorrichtung nach Anspruch 2, dadurch gekennzeichnet, daß das Formwerkzeug (11) als Durchlaufwerkzeug für die zu verformende Welle (4c) ausgebildet ist.

4. Vorrichtung nach Anspruch 3, dadurch gekennzeichnet, daß der Formspalt (11a) des Formwerkzeuges (11) bogenförmig gekrümmt ausgebildet ist, wobei der oder die Krümmungsmittelpunkte oberhalb der unteren Einlaufrolle (6) liegen.

5. Vorrichtung nach Anspruch 4, dadurch gekennzeichnet, daß der Krümmungsradius der Krümmung des Formspaltes (11a) etwa dem Radius des zu fertigenden Rohres entspricht.

6. Vorrichtung nach einem der Ansprüche 3 bis 5, dadurch gekennzeichnet, daß das Formwerkzeug (11) von seinem Einlauf (13) zu seinem Auslauf (14) hin zunächst sich konisch zu einem schmalen Spalt (17) und anschließend sich schneckenartig zu einer runden Öffnung (18) verengend ausgebildet ist.

7. Vorrichtung nach einem der Ansprüche 3 bis 6, dadurch gekennzeichnet, daß das Formwerkzeug (11) derartig auf der Drehachse der oberen Einlaufrolle (5) angeordnet ist, daß sein als runde Öffnung (18) ausgebildeter Auslauf (14) etwa auf der Verbindungslinie (15) der Drehachsen (7 und 8) der beiden Eiinlaufrollen (5 und 6) liegt und daß der Einlauf (13) des Formwerkzeuges in Einlaufrichtung (16) des Bandes (4) gesehen vor dieser Verbindungslinie liegt.

8. Vorrichtung nach einem der Ansprüche 2 bis 7, dadurch gekennzeichnet, daß die Preßringe (19, 20) an der Auslaufstelle der Wickeleinrichtung (1) im Abstand vom Formwerkzeug (11) angeordnet sind, der gleich dem Abstand der verformten Wellen des gefertigten Rohres ist.

9. Flexibles Wellrohr aus einem schraubenlinienförmig gewickelten dünnen Metallband mit parallel zu seiner Längsrichtung verlaufenden Wellen, bei dem mindestens jeweils eine Welle zweier aufeinanderfolgender Windungen ineinandergelegt und miteinander verbunden sind, nach dem Verfahren nach Anspruch 1, wobei die zunächst in axialer Richtung umlaufend zusammengepreßte und anschließend vom Wellenscheitel aus zum Wellengrund hin zusammengerollte ineinanderliegende Welle (4c) in den Wellengrund eingepreßt ist.

**Claims**

1. A method for making a flexible corrugated tube, by helicoidally winding a thin metal strip with corrugations extending parallel to its longitudinal direction, in which at least one corrugation of two successive turns are nested into and connected with each other, wherein firstly the nested corrugation (4c) is so compressed circumferentially in axial direction that the flanks of the corrugation lie flat against each other, that the flat-pressed corrugation is rolled together from the crest in the direction of the base of the corrugation and that thereafter the rolled-up corrugation is pressed into the corrugation trough.

2. An apparatus for carrying out the method according to Claim 1, with a winding device for guiding the finished tube and with an intake roller pair arranged at the position of entry of the strip into the winding device and engaging said strip broadside-on and effecting the mutual bonding of the adjacent windings of the tube, in which one of the intake rollers is mounted rotatable about an axis of rotation within the winding device whilst the other intake roller is arranged rotatably about an axis of rotation outside the winding device, in which on the axis of rotation (7) of the upper intake roller (5) a forming tool (11) is arranged lockable into position with a forming slot (11a) so designed that first of all the nested corrugation (4c) of the incoming strip (4) is so compressed in axial direction circumferentially that the corrugation flanks of the corrugation lie flat upon each other and that the flat-pressed corrugation is then rolled together from the corrugation crest in the direction of the corrugation base and that on the axes of rotation (7 and 8) of the intake rollers (5 and 6) pression rings (19 and 20) are arranged for pressing the deformed corrugation (4c) into the corrugation trough.

3. An apparatus according to Claim 2, characterised in that the forming tool (11) is constructed as a continuous-pass tool for the corrugation (4c) to be shaped.

4. An apparatus according to Claim 3, characterised in that the forming slot (11a) of the forming tool (11) is constructed with an arc-shaped curvature, in which the centre or centres of curvature are situated above the lower intake roller.

5. An apparatus according to Claim 4, characterised in that the radius of curvature of the curvature of the forming slot (11a) substantially corresponds to the radius of the tube to be produced.

6. An apparatus according to any one of Claims 3 to 5 characterised in that the forming tool (11), in the direction from its intake (13) to its outlet (14), first conically tapers to a narrow slot (17) and thereafter helically narrows to a round aperture (18).

7. An apparatus according to any one of Claims 3 to 6, characterised in that the forming tool (11) is so arranged on the axis of rotation of the upper intake roller (5), that its outler (14) in the form of a round aperture (18) is situated substantially on the connecting line (15) of the axes of rotation (7 and 8) of the two intake rollers (5 and 6) and that the intake (13) of the forming tool, as viewed in the direction of entry (16) of the strip (4) is located before this connecting line.

8. An apparatus according to any one of Claims 2 to 7, characterized in that the pressure rings (19, 20) at the outlet end of the winding device (1) are arranged at a distance from the forming tool (11) which distance equals the spacing of the deformed corrugations of the finished tube.

9. A flexible corrugated tube made of a helicoidally wound thin metal strip with corrugations extending parallel to its longitudinal direction, in which at least one corrugation each of two successive turns are nested into and bonded to each other, according to the method of Claim 1, in which the nested corrugation which is firstly circumferentially compressed in axial direction and thereafter rolled together from the crest in the direction of the base of corrugation is pressed into the corrugation trough.

**Revendications**

1. Procédé de fabrication d'un tube ondulé flexible par enroulement hélicoïdal d'une mince bande métallique ayant des ondulations orientées parallèlement à son sens longitudinal, de façon que deux ondulations au moins de deux spires successives s'engagent l'une dans l'autre et soient accouplées entre elles, afin que d'abord les ondulations engagées l'une dans l'autre (4c) soient comprimées ensemble en rotation dans le sens axial, que les flancs des ondulations ainsi comprimées à plat soient enroulées ensemble de la crête au creux de l'ondulation, et que les ondulations ainsi enroulées ensemble soient finalement comprimées dans le creux de l'ondulation.

2. Appareil pour la mise en œuvre du procédé selon la Revendication 1, lequel comprend un moyen d'enroulement pour guider le tube fini et une paire de galets d'entrée disposés à l'entrée de la bande dans le moyen d'enroulement, ces galets agissant sur les deux côtés larges de la bande et effectuant l'assemblage réciproque des spires adjacentes du tube, de telle sorte qu'un galet d'entrée soit monté en rotation autour d'un axe de rotation disposé à l'intérieur et que l'autre galet d'entrée soit monté en rotation autour d'un axe disposé à l'extérieur du moyen d'enroulement, cet appareil étant caractérisé en outre par le fait qu'il est prévu, sur l'axe de rotation (7) du galet d'entrée supérieur (5), un outil de mise en forme (11) pourvu d'une gorge profilée (11a) conçue de telle sorte qu'en premier lieu les ondulations engagées les unes dans les autres (4c) et formées dans la bande d'alimentation (4) soient comprimées dans le sens axial tout en tournant, que les flancs des ondulations portent à plat les unes contre les autres, et que les ondulations comprimées à plat soient ensuite comprimées entre elles du sommet au creux de l'ondulation et enroulées ensemble, et enfin qu'il est prévu, sur les axes de rotation (7, 8) des galets d'entrée (5, 6), des bagues de pression (19, 20) destinées à enfoncer les ondulations déformées (4c) dans le creux des ondulations.

3. Appareil selon la Revendication 2, caractérisé en ce que l'outil de mise en forme (11) est réalisé en tant qu'outil continu pour l'exécution de l'ondulation à déformer (4c).

4. Appareil selon la Revendication 3, caractérisé en ce que la gorge de mise en forme (11a) de l'outil (11) est réalisée avec une forme en arc, afin que le ou les centres de courbure se trouvent au-dessus du galet d'entrée inférieur (6).

5. Appareil selon la Revendication 4, caractérisé en ce que le rayon de courbure de la courbe de la cavité de mise en forme (11a) correspond sensiblement au rayon du tube à réaliser.

6. Appareil selon l'une quelconque des Revendications 3 à 5, caractérisé en ce que l'outil de mise en forme (11), entre son entrée (13) et sa sortie (14), est d'abord conique, jusqu'à une fente étroite (17), puis se rétrécit pour former une volute jusqu'à une ouverture arrondie (18).

7. Appareil selon l'une quelconque des Revendications 3 à 6, caractérisé en ce que l'outil de mise en forme (11) est agencé de telle sorte, sur l'axe de rotation du galet d'entrée supérieur (5), que sa sortie en forme d'ouverture arrondie (18) se trouve en substance sur la ligne (15) qui relie les axes de rotation (7, 8) des deux galets d'entrée (5, 6) et que l'entrée (13) de l'outil de mise en forme, vu dans le sens de l'entrée (16) de la bande (4), se trouve en avant de cette ligne (15) qui relie les deux axes de rotation des galets d'entrée (7, 8).

8. Appareil selon l'une quelconque des Revendications 2 à 7, caractérisé en ce que les bagues de pression (19, 20) sont disposées au point d'entrée du dispositif d'enroulement (1), à une certaine distance de l'outil de mise en forme (11), cette distance étant égale à celle qui sépare les ondulations déformées du tube terminé.

9. Tube ondulé flexible réalisé à partir d'une bande métallique mince enroulée en hélice et dont les ondulations sont orientées dans le sens longitudinal du tube, dans lequel les ondulations d'au moins chacune de deux spires successives sont engagées l'une dans l'autre et réunies entre elles, selon le procédé de la Revendication 1, caractérisé en ce que les ondulations (4c), d'abord comprimées entre elles et en rotation dans le sens axial, puis comprimées de la crête au creux des ondulations, tout en étant enroulées ensemble, sont enfoncées dans le creux de l'ondulation.

Fig. 1

Fig. 2

Fig. 3

Fig. 4

Fig. 5

3

4c

4a    4b

Fig. 6

11

4a    4b

Fig. 8

11

4b

4a

17

Fig. 7

11    11

4a

4b

Fig. 9

11    18

4a

4b

Fig. 10

4a

4b

Fig. 11